# EUROPEAN PATENT APPLICATION

(11) **EP 4 749 252 A1**
(43) Date of publication of application: **27.05.2026**
(21) Application number: 23940935.2
(22) Date of filing: 27.12.2023
(51) Int. Cl.: G01F 23/284

(54) **DEVICE FOR MEASURING ELECTRODE LENGTH OF CARBON ELECTRODE IN ELECTRIC RESISTANCE MELTING FURNACE, AND METHOD FOR OPERATING ELECTRIC RESISTANCE MELTING FURNACE**

(30) Priority: 14.07.2023 JP 2023115847
(71) Applicant: Wadeco Co., Ltd., Amagasaki-shi, Hyogo 661-0021 (JP)
(72) Inventor: The designation of the inventor has not yet been filed
(74) Representative: Hoefer & Partner Patentanwälte mbB
(86) International application number: PCT/JP2023/047130
(87) International publication number: WO 2025/017942

(57) **Abstract**

In an electric resistance melting furnace, even when a metallic guide pipe (20) melts and falls, a molten liquid surface (200) can be detected and an electrode length of a carbon electrode (10) can be measured more accurately. A measurement apparatus includes: a guide pipe (20) formed by connecting a plurality of metallic guide pipe pieces (21) and configured to be inserted to reach a lower end of the carbon electrode (10); and a distance meter (30) configured to be attached to an upper end of the guide pipe (20), and including a waveguide and a transmission and reception unit for a microwave or a millimeter wave. An inner diameter of the guide pipe (20) is larger than an inner diameter of the waveguide (35) of the distance meter (30), the guide pipe (20) and the distance meter (30) are connected via a tapered structure (40) having a tapered cavity expanding from the waveguide (35) toward the guide pipe (20), and the microwave or the millimeter wave is transmitted from a lower end of the guide pipe (20) toward a molten liquid surface (200) of an object to be melted, and the microwave or the millimeter wave reflected by the molten liquid surface (200) is received to measure a distance between the distance meter (30) and the molten liquid surface (200).

## Description

### TECHNICAL FIELD

The present invention relates to an apparatus for measuring an electrode length of a carbon electrode in an electric resistance melting furnace used for putting an object to be melted such as iron ore into the furnace and melting the object to be melted. The present invention also relates to an operation method of the electric resistance melting furnace.

### BACKGROUND ART

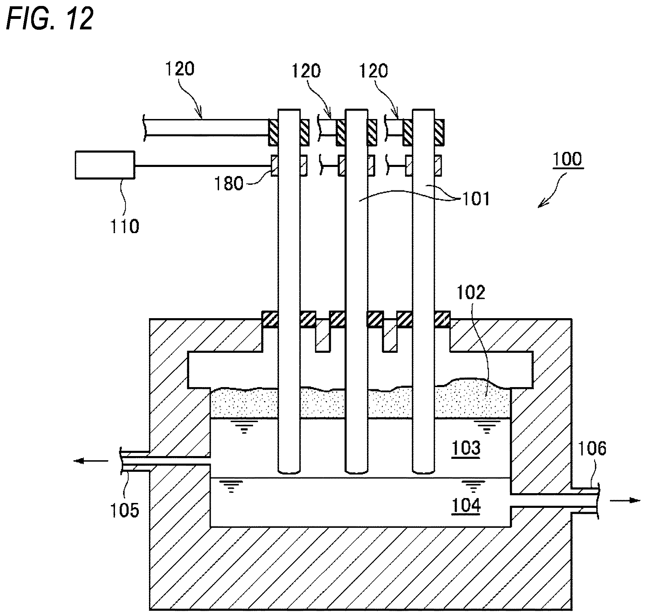

An electric resistance melting furnace is used in which an object to be melted such as iron ore is put into a furnace, carbon electrodes are inserted into the deposited object to be melted and are energized to melt the object to be melted, and a molten object is then recovered. FIG. 12 is a schematic view showing an example of an electric resistance melting furnace and shows a case where iron ore is melted. As shown in this figure, in an electric resistance melting furnace 100, carbon electrodes 101 are inserted into an iron ore 102 deposited in the furnace, a current is passed through the carbon electrodes 101, the iron ore 102 present between the electrodes acts as a resistor, and the iron ore 102 is melted by Joule heat. Power is supplied to the carbon electrodes 101 from a power supply 110 via electrode holders 180 attached to the carbon electrodes 101. When the melting proceeds, three layers, which are an unmolten iron ore 102, a molten slag layer 103, and a molten iron layer 104, are formed in this order from the top, molten slag is recovered from a slag discharge port 105, and molten iron is recovered from a molten steel tapping hole 106.

At this time, in order to energize the carbon electrode 101 while moving the carbon electrodes 101 up and down in an upper-lower direction using electrode elevating devices 120, it is necessary to detect a molten liquid surface of the molten iron layer 104 and determine an electrode length of the carbon electrodes 101, and control elevating positions of the carbon electrodes 101.

In Patent Literature 1, the applicant inserts a metallic guide pipe reaching a lower end of the carbon electrode into at least one carbon electrode, and attaches a transceiver of microwaves or millimeter waves to an upper end of the guide pipe, transmits the microwaves or the millimeter waves from the transceiver through the inside of the guide pipe, receives the microwaves or millimeter waves reflected at a lower end of the guide pipe, detects the molten liquid surface of the molten iron layer, and determines the electrode length of the carbon electrode from a distance from the transceiver to the molten liquid surface.

### CITATION LIST

### PATENT LITERATURE

Patent Literature 1: JP5671744B

### SUMMARY OF INVENTION

### TECHNICAL PROBLEM

However, since the guide pipe is made of metal, when the object to be melted is metal having a high melting point such as iron ore, the lower end of the guide pipe melts and falls due to high heat from the molten liquid surface. Then, an inner wall of the carbon electrode is exposed at the portion where the guide pipe melts and falls, and the microwaves or the millimeter waves are absorbed by the exposed carbon, resulting in a large attenuation of transmission power and reception power. Therefore, there is a concern that the molten liquid surface is not accurately detected and the electrode length of the carbon electrode is not accurately measured.

The present invention has been made in view of such circumstances, and an object thereof is to more accurately detect, in an electric resistance melting furnace, a molten liquid surface even when a metallic guide pipe melts and falls, and more accurately measure an electrode length of a carbon electrode.

### SOLUTION TO PROBLEM

In order to solve the above problems, the present invention provides a measurement apparatus of an electrode length of a carbon electrode in an electric resistance melting furnace of the following (1) to (11).
(1) A measurement apparatus of an electrode length of a carbon electrode in an electric resistance melting furnace in which a carbon electrode suspended in the furnace is inserted into an object to be melted deposited in the furnace and the carbon electrode is energized to melt the object to be melted, the measurement apparatus including:
   a guide pipe formed by connecting a plurality of metallic guide pipe pieces and configured to be inserted to reach a lower end of the carbon electrode; and
   a distance meter configured to be attached to an upper end of the guide pipe, and including a waveguide and a transmission and reception unit for a microwave or a millimeter wave, in which
   an inner diameter of the guide pipe is larger than an inner diameter of the waveguide of the distance meter,
   the guide pipe and the distance meter are connected via a tapered structure having a tapered cavity expanding from the waveguide toward the guide pipe, and
   the microwave or the millimeter wave is transmitted from a lower end of the guide pipe toward a molten liquid surface of the object to be melted, and the microwave or the millimeter wave reflected by the molten liquid surface is received to measure a distance between the distance meter and the molten liquid surface.
(2) In the measurement apparatus of an electrode length of a carbon electrode in an electric resistance melting furnace according to the above (1), the guide pipe pieces are connected by a threaded socket.
(3) In the measurement apparatus of an electrode length of a carbon electrode in an electric resistance melting furnace according to the above (1), the guide pipe pieces are connected to each other by a taper union having an outer shape in which two tapered surfaces extending continuously from a central portion having a maximum diameter to both ends are formed.
(4) In the measurement apparatus of an electrode length of a carbon electrode in an electric resistance melting furnace according to the above (1), a connecting portion between the tapered structure and the guide pipe is closed by a member made of a material through which the microwave or the millimeter wave passes.
(5) In the measurement apparatus of an electrode length of a carbon electrode in an electric resistance melting furnace according to the above (1), an inert gas is supplied to the guide pipe to increase an internal pressure, when the internal pressure rapidly increases, it is determined that the guide pipe is clogged, and the supply amount of the inert gas is increased to remove a clogged portion.
(6) In the measurement apparatus of an electrode length of a carbon electrode in an electric resistance melting furnace according to the above (1), a metal plate having a hole with an opening diameter that does not allow the microwave or the millimeter wave to penetrate, or a wire mesh having an opening that does not allow the microwave or the millimeter wave to penetrate, is attached to a supply port of an inert gas to the guide pipe.
(7) In the measurement apparatus of an electrode length of a carbon electrode in an electric resistance melting furnace according to the above (1), the microwave or the millimeter wave is circularly polarized and transmitted toward the molten liquid surface.
(8) The measurement apparatus of an electrode length of a carbon electrode in an electric resistance melting furnace according to the above (1), further includes: a measurement mode configured to measure an electrode length of the carbon electrode a plurality of times and calculate an average value thereof.
(9) The measurement apparatus of an electrode length of a carbon electrode in an electric resistance melting furnace according to the above (1), further includes: a measurement mode configured to measure an electrode length of the carbon electrode a plurality of times, and average at least any one or both of the obtained received beat waveform and a distance spectrum waveform obtained by performing FFT processing on the received beat waveform.
(10) In the measurement apparatus of an electrode length of a carbon electrode in an electric resistance melting furnace according to the above (1), the guide pipe is made of SUS.
(11) In the measurement apparatus of an electrode length of a carbon electrode in an electric resistance melting furnace according to the above (1), a reflection signal appearing at every constant distance of the guide pipe is observed.
   In order to solve the above problems, the present invention provides an operation method of the following (12).
(12) An operation method of an electric resistance melting furnace in which a carbon electrode suspended in the furnace is inserted into an object to be melted deposited in the furnace and the carbon electrode is energized to melt the object to be melted, the operation method including:
   determining a distance (L1) from the distance meter to the molten liquid surface by the measurement apparatus of an electrode length of a carbon electrode according to any one of the above (1) to (11);
   measuring a separation distance (L2) between the distance meter and a second distance meter that is disposed above the distance meter, and determining a distance (L3) from the second distance meter to the molten liquid surface by adding the separation distance (L2) and the determined distance (L1); and
   controlling a hanging position of the carbon electrode based on the distance (L3).

In the following description, the "measurement apparatus of an electrode length of a carbon electrode in an electric resistance melting furnace" is also simply referred to as a "measurement apparatus".

### ADVANTAGEOUS EFFECTS OF INVENTION

According to the measurement apparatus of the present invention, even when the metallic guide pipe melts and falls, the molten liquid surface can be detected and the electrode length of the carbon electrode can be measured more accurately.

Further, according to the operation method of the present invention, since the electrode length of the carbon electrode can be measured more accurately even when the metallic guide pipe melts and falls, the raising and lowering of the carbon electrode can be controlled more accurately, and efficient and stable operation is enabled.

### BRIEF DESCRIPTION OF DRAWINGS

FIG. 1 is a cross-sectional view schematically showing an apparatus configuration of an embodiment according to a measurement apparatus of the present invention along an axis of a carbon electrode.
FIG. 2 is an enlarged view showing a threaded socket.
FIG. 3 is an enlarged view showing a tapered structure and a sealing member.
FIG. 4A is a partially enlarged view of a portion A of FIG. 1, FIG. 4B is a partially enlarged view of a portion B of FIG. 1, and FIG. 4C is a partially enlarged view of a portion C of FIG. 1.
FIG. 5A is a cross-sectional view showing a taper union, and FIG. 5B is a plan view viewed from an A-A direction in FIG. 5A.
FIG. 6A is a side view showing a set screw, and FIG. 6B is a plan view viewed from a B-B direction of FIG. 6A.
FIG. 7 is a schematic view showing a rotation direction of an electric field by transmission and reception when circularly polarized microwaves or millimeter waves are used.
FIG. 8 is a chart showing a result of verification result 1.
FIG. 9 is a chart showing a result of verification result 2.
FIG. 10 is a chart showing a result of verification result 3.
FIG. 11 is a view illustrating an operation method of an electric resistance melting furnace of the present invention.
FIG. 12 is a schematic view showing an example of an electric resistance melting furnace.

### DESCRIPTION OF EMBODIMENTS

Hereinafter, the present invention will be described in detail with reference to the drawings.

As shown in FIG. 12, in an electric resistance melting furnace, a plurality of carbon electrodes are inserted into an object to be melted such as iron ore, and the carbon electrodes are energized to melt the object to be melted. In the present invention, at least one carbon electrode functions as a "measurement apparatus of an electrode length of the carbon electrode".

### [Measurement Apparatus]

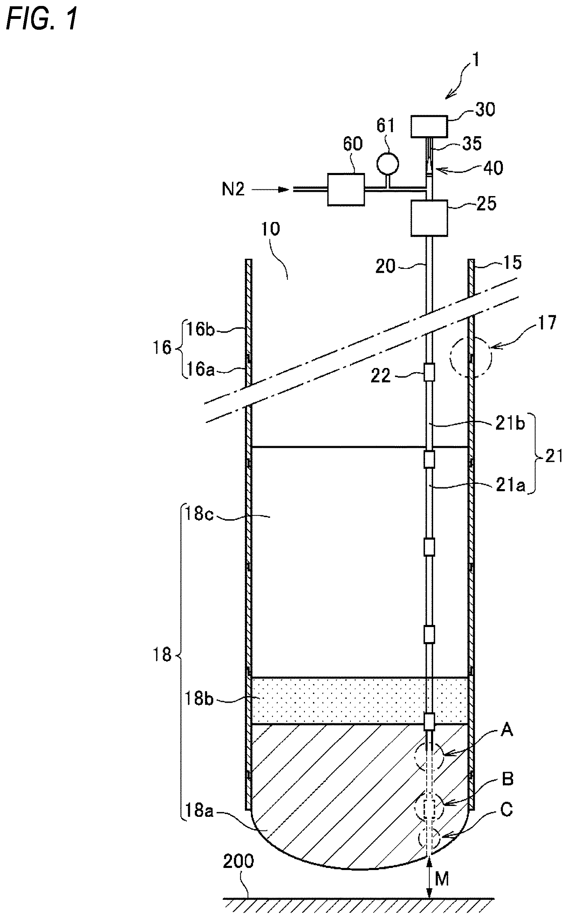

FIG. 1 is a cross-sectional view schematically showing an apparatus configuration of a measurement apparatus of the present invention along an axis of a carbon electrode. As shown in this figure, in a measurement apparatus 1, a metallic guide pipe 20 reaching a lower end of a carbon electrode 10 is inserted into the normal carbon electrode 10, and a distance meter 30 is attached to an upper end of the guide pipe 20.

The carbon electrode 10 accommodates an electrode body 18 inside an electrode case (metal cover) 15 formed of a metallic cylindrical body. The electrode body 18 of the carbon electrode 10 is divided into an electrode baking portion 18a, a coal tar melting portion 18b, and an electrode material portion 18c in order from a side close to a molten liquid surface 200 of the object to be melted. When the object to be melted is melted, a side (hereinafter, referred to as a "lower end") of the electrode baking portion 18a that is in contact with or faces the molten liquid surface 200 is consumed. In order to compensate for this consumption, a mixture of a carbon block, which is an electrode material, and a coal tar pitch is put from an opening at an upper end of the electrode case 15. The electrode case 15 is formed by connecting a plurality of electrode case pieces (metal cover pieces) 16 to each other, and since the lower end is consumed during melting, another new electrode case piece (metal cover piece) 16b is added onto a lower electrode case piece (metal cover piece) 16a. It is to be noted that reference numeral 17 denotes a joint of the electrode case piece 16.

The guide pipe 20 is formed by connecting a plurality of guide pipe pieces 21 together using the joints 22, and since a lower end thereof is consumed during melting as in the case of the carbon electrode 10, another new guide pipe piece 21b is added onto a lower guide pipe piece 21a using the joint 22. When the guide pipe pieces 21 are added, a guide pipe clamp 25 is used to separate a tapered structure 40 and the guide pipe 20 to be described below and to connect them again.

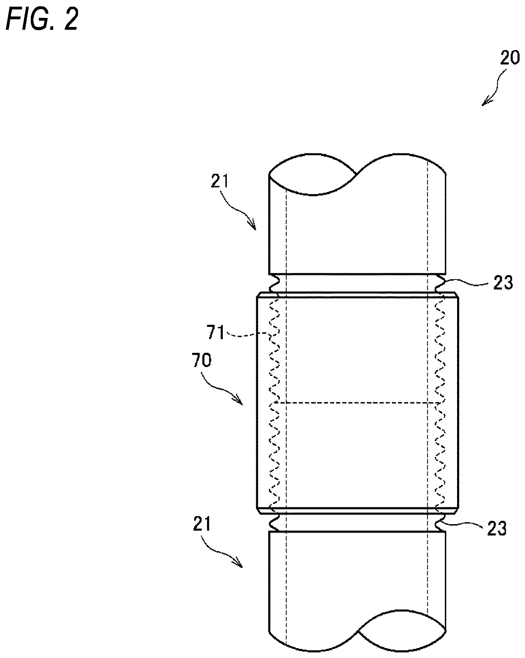

As shown in FIG. 2, the joint 22 (see FIG. 1) is preferably a threaded socket 70. A screw groove 71 is formed in an inner circumferential surface of the threaded socket 70, and screw grooves 23 are formed in outer peripheral surfaces at both ends of the guide pipe piece 21, respectively, so as to be engaged with the screw groove 71 of the threaded socket 70. By using the threaded socket 70, the guide pipe pieces 21 can be reliably connected, and linearity can be achieved when the plurality of the guide pipe pieces 21 are connected.

The electrode case piece 16 of the carbon electrode 10, the guide pipe piece 21 of the guide pipe 20, and the joint 22 are preferably made of metal having a higher melting point. As the metal, for example, SUS 304 or the like can be suitably used since it is inexpensive, is excellent in workability and environmental resistance, and does not generate rust. Since SUS 304 suppresses a decrease in propagation loss due to quality deterioration of the material, stable measurement is enabled.

A waveguide 35 and a tapered structure 40 to be described below are also preferably made of SUS 304.

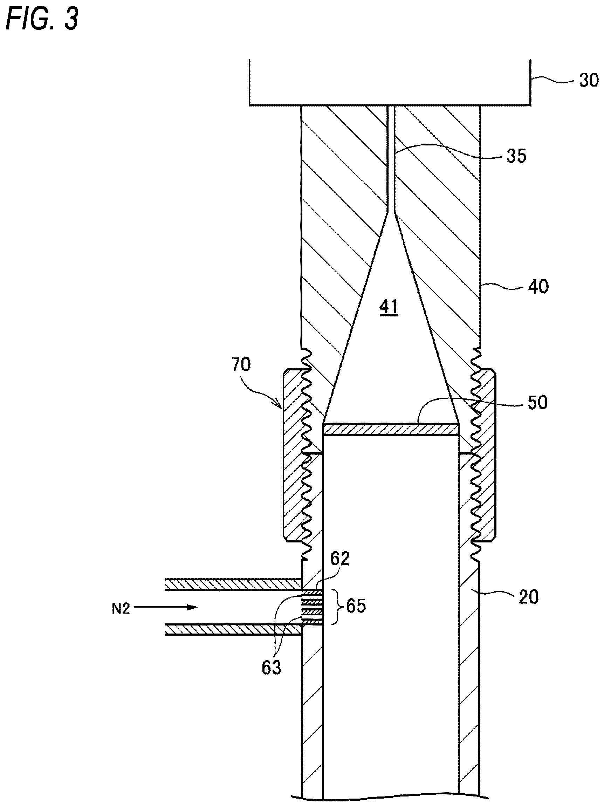

The distance meter 30 includes a transmitting and receiving means (not shown) for microwaves or millimeter waves, and is connected to the upper end of the guide pipe 20 via the tapered structure 40. As shown in FIGS. 1 and 3, an inner diameter of the guide pipe 20 is larger than an inner diameter of the waveguide 35 of the distance meter 30, and the tapered structure 40 is a member having a tapered cavity 41 expanding from a tip end of the waveguide 35 of the distance meter 30 toward the upper end of the guide pipe 20. The tapered structure 40 is connected to the guide pipe 20 by, for example, the threaded socket 70.

In addition, the guide pipe 20, the waveguide 35, and the tapered structure 40 described above may also have a rectangular shape in addition to a circular shape in cross section.

The microwaves or millimeter waves can effectively propagate through the guide pipe 20 and further through a portion where the guide pipe 20 has melted and fallen (an exposed surface 12 to be described below), allowing the electrode length of the carbon electrode 10 to be measured more accurately. However, although the inner diameter of the guide pipe 20 is preferably larger than the inner diameter of the waveguide 35, if the guide pipe 20 becomes too thick, there is a risk that the cost will increase. Specifically, when the millimeter waves of 79 GHz are used and the inner diameter of the waveguide 35 is φ2.8 mm, the inner diameter of the guide pipe 20 is preferably φ35.0 to 38.0 mm, which is over ten times as much as the inner diameter of the waveguide 35.

In the case of a carbon electrode that is not a self-baking type (self), the electrode length is measured using a circular hole that is made directly to the lower end of the carbon electrode as an alternative to the main guide pipe 20.

Further, as shown in FIG. 3, it is preferable that a connecting portion between the tapered structure 40 and the guide pipe 20 is closed by a sealing member 50 made of a material through which detection waves pass, for example, a fluororesin. Since heat from the molten liquid surface 200 is received through the guide pipe 20, or dust or the like in the furnace enters, an internal member of the distance meter 30 such as the transmitting and receiving means is protected by the sealing member 50.

The detection waves are microwaves or millimeter waves, but a higher frequency is preferable, and the millimeter waves are more preferable.

In the measurement apparatus 1 configured as described above, even when the lower end of the carbon electrode 10 is consumed, at the lower end portion of the guide pipe 20, a part of the guide pipe 20 and the joint 22 melt and fall by receiving the high heat from the molten liquid surface 200, and a boundary surface with the carbon electrode 10 is exposed.

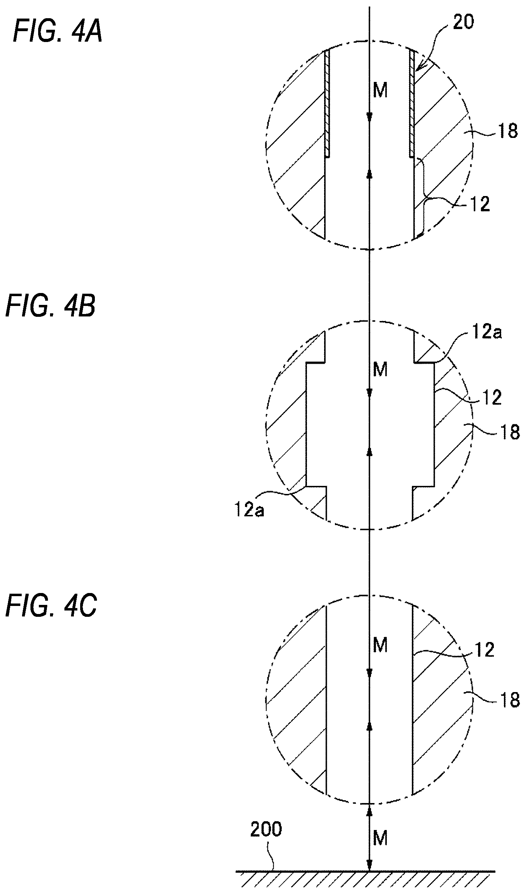

For example, FIG. 4A is an enlarged view of a portion A of FIG. 1, FIG. 4B is an enlarged view of a portion B of FIG. 1, and FIG. 4C is an enlarged view of a portion C of FIG. 1. FIG. 4A shows a portion where the guide pipe 20 starts melting and falling and a boundary with the carbon electrode 10 starts to appear, FIG. 4B shows a portion where the joint 22 has melted and fallen, and FIG. 4C shows a portion where the guide pipe 20 has melted and fallen.

As shown in FIG. 4A, the cross-sectional shape changes at the portion at the start of melting and falling of the guide pipe 20, but since the inner diameter of the guide pipe 20 is sufficiently larger than the wall thickness of the guide pipe 20, it can be said that this does not substantially affect the measurement.

In FIG. 4A, the guide pipe 20 melts and falls to form a stepped portion where the cross-sectional shape changes, but the steps do not have to be in the same horizontal position over the entire circumference of the inner diameter, and may be different in an upper-lower direction in this figure. As shown in this figure, at a portion closer to the molten liquid surface 200 than a lower half of the portion A, the guide pipe 20 and the joint 22 melt and fall, and the boundary surface with the carbon electrode 10 is exposed as indicated by reference numeral 12.

In the following description, the portion where the guide pipe 20 and the joint 22 melt and fall and the carbon electrode 10 is exposed is referred to as the "exposed surface 12".

Usually, when the microwaves or the millimeter waves propagate through the carbon tube, since the conductivity of the wall surface is low, the propagation loss increases, and transmitted and received signals are absorbed. Since the exposed surface 12 is carbon, the microwaves or the millimeter waves are significantly attenuated while propagating through the exposed surface 12. However, as described above, by making the inner diameter of the guide pipe 20 larger than the inner diameter of the waveguide 35, suppressing excitation of unnecessary high-order modes other than a circular TE11 mode constituting the circular polarization as much as possible, and maintaining propagation mainly in the circular TE11 mode, it is possible to reduce propagation loss and deterioration of distance measurement accuracy.

Then, as indicated by a reference character M in FIG. 1, the microwaves or the millimeter waves from the transmitting and receiving means of the distance meter 30 propagate through the waveguide 35, the cavity 41 of the tapered structure 40, and the guide pipe 20, further propagate well through the exposed surface 12 without significant attenuation, and are transmitted from the lower end of the guide pipe 20 to the molten liquid surface 200. Then, the microwaves or the millimeter waves are reflected by the molten liquid surface 200 and received by the transmitting and receiving means of the distance meter 30 along a reverse path, and the molten liquid surface 200 is detected. A distance from the distance meter 30 to the molten liquid surface 200, that is, the electrode length of the carbon electrode 10 is determined from a time difference between transmission and reception. In the related art, the microwaves or millimeter waves are significantly attenuated at the exposed surface 12, but in the measurement apparatus 1 of the present invention, the attenuation at the exposed surface 12 is suppressed, making it possible to more accurately detect the molten liquid surface 200 and determine the electrode length of the carbon electrode 10.

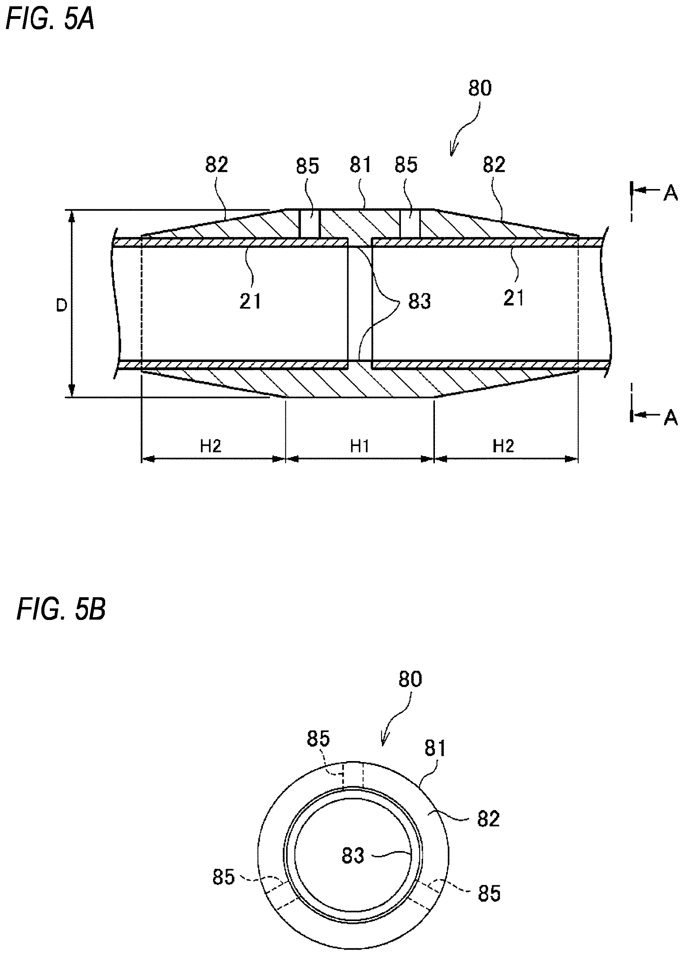

As described above, the detection waves propagate well through the exposed surface 12 with low attenuation, and it is also preferable to use a taper union 80 shown in FIGS. 5A and 5B as the joint 22 in order to further improve the propagation. FIG. 5A is a cross-sectional view showing the taper union 80, and FIG. 5B is a plan view viewed from an A-A direction in FIG. 5A. As shown in FIG. 5A, in the taper union 80, a central portion 81 has a maximum outer diameter and is formed into a cylindrical shape with a predetermined width, and two tapered surfaces 82 extending continuously from the central portion 81 to both ends are formed, giving the entire union an approximately barrel-shaped outer shape.

Further, a stepped stopper 83 having the same width as the thickness of the guide pipe piece 21 protrudes in a circular ring shape on an inner circumferential surface of a central portion of the taper union 80 in a longitudinal direction, and the guide pipe piece 21 is inserted to abut on the stopper 83. Here, since the stopper 83 has the same thickness as the guide pipe piece 21, the propagation of the microwaves or the millimeter waves is not impeded.

Longitudinal dimensions H1 and H2 of the central portion 81 and the tapered surfaces 82 of the taper union 80 are preferably equal to or greater than the wavelength of the microwaves or the millimeter waves. The lengths H2 of the two tapered surfaces 82 may be the same or different.

A maximum outer diameter D of the taper union 80 is preferably set to a dimension that does not generate a high-order mode of the microwaves or the millimeter waves.

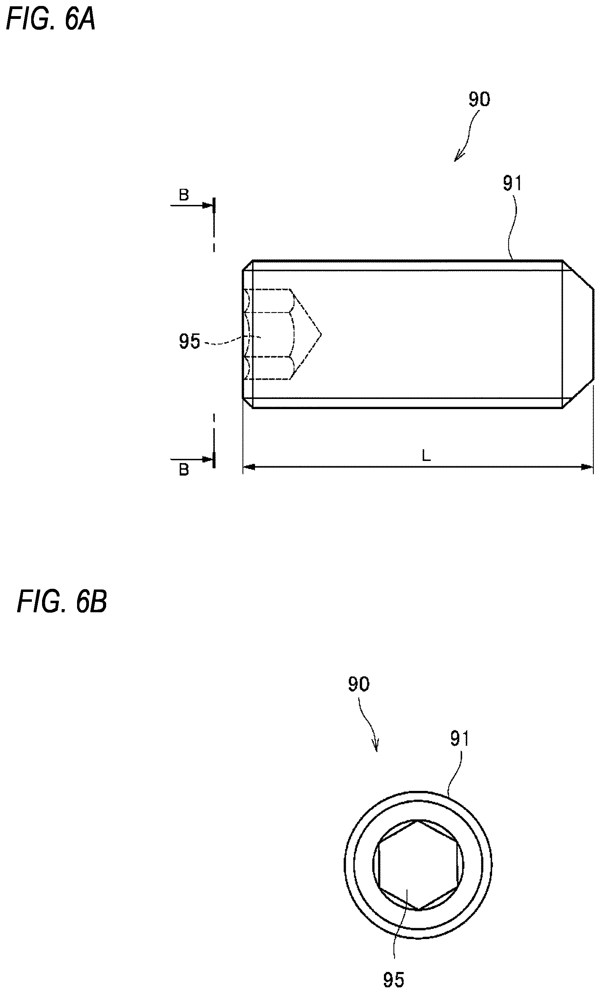

Further, as shown in FIG. 5B, in the central portion 81 of the taper union 80, screw holes 85 for mounting set screws 90 shown in FIGS. 6A and 6B are formed at a plurality of locations along the circumferential direction so as to penetrate an inner circumferential surface. FIG. 6A is a side view showing the set screw 90, and FIG. 6B is a plan view viewed from a B-B direction of FIG. 6A.

The set screw 90 has a longer length L in the longitudinal direction than a thickness of the central portion 81 of the taper union 80, and has a screw 91 formed on an outer circumferential surface thereof that is engaged with threads of the screw hole 85 of the taper union 80. A hexagonal hole 95 is formed in one end surface. The set screw 90 is made of the same material as the taper union 80 and the guide pipe piece 21.

To connect the guide pipe pieces 21 using the taper union 80 and the set screw 90, the guide pipe piece 21 is inserted until the guide pipe piece 21 abuts on the stopper 83 of the taper union 80, and then the set screw 90 is mounted into the screw hole 85 of the taper union 80 and screwed in until the end surface of the set screw 90 reaches the outer circumferential surface of the guide pipe piece 21 to fix the guide pipe piece 21 in place. Thereafter, a portion of the set screw 90 protruding from the screw hole 85 of the taper union 80 is cut off by a sander or the like, and the outer circumferential surface of the taper union 80 is processed so as not to be uneven.

By using the taper union 80 as the joint 22, a stepped portion 12a is eliminated on the exposed surface 12 shown in FIG. 4B, and reflection of the microwaves or the millimeter waves by the stepped portion 12a is eliminated.

Although the measurement apparatus 1 is configured as described above, various modifications are possible. For example, as shown in FIG. 1, it is preferable to increase the internal pressure of the guide pipe 20 by supplying nitrogen gas (N₂) or an inert gas between the tapered structure 40 of the guide pipe 20 and the distance meter 30. Since the lower end of the guide pipe 20 is open, molten metal may flow in, and by increasing the internal pressure of the guide pipe 20, the flow of the molten metal is prevented. Further, the lower end of the guide pipe 20 melts to close the guide pipe 20, and the internal pressure of the guide pipe 20 may rapidly increase. When the rapid increase of the internal pressure is detected, the supply amount of the nitrogen gas or the inactive gas is increased to remove any object (clogged object) stuck in the guide pipe 20. The internal pressure is adjusted by a pressure regulator 60. It is to be noted that reference numeral 61 denotes a pressure gauge.

Further, as shown in FIG. 3, a metallic inert gas intake member 65 having a number of fine holes 63 formed therein may be attached to an intake port 62 of the nitrogen gas or the inactive gas to the guide pipe 20. Although not shown, the inert gas intake member 65 may be a wire mesh. An opening diameter of the fine hole 63 is set to a diameter that prevents the intrusion of microwaves and millimeter waves and allows the inert gas to flow easily, for example, about φ1.5 mm in the case of millimeter waves of 79 GHz. An opening of the wire mesh is also set to the same dimension. The inert gas intake member 65 can prevent the microwaves or the millimeter waves from leaking from the intake port 62.

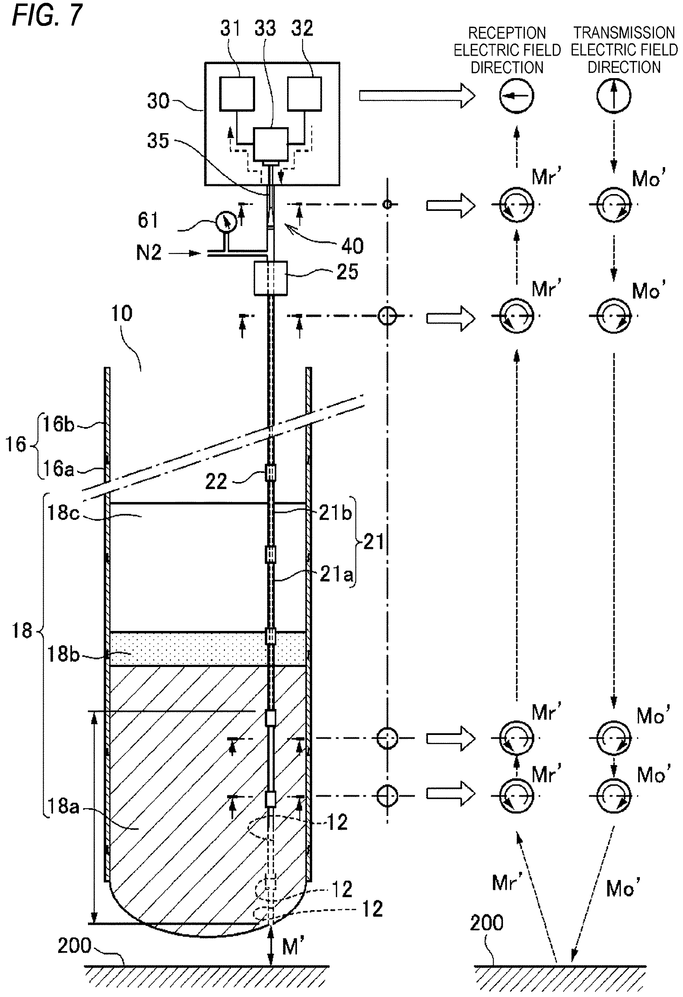

Further, it is preferable to use circularly polarized microwaves or millimeter waves M'. As shown in FIG. 7, the distance meter 30 includes a reception circuit 31, a transmission circuit 32, and a circularly polarized wave generator 33. The reception circuit 31 receives linearly polarized waves whose electric field direction is different from that of linearly polarized waves transmitted from the transmission circuit 32. By using this characteristic, the reception circuit 31 and the transmission circuit 32 are separated from each other, and the circularly polarized wave generator 33 is interposed between them and the waveguide 35, thereby improving the accuracy of signal processing.

On the right side of FIG. 7, the electric field direction of the detection waves M' in each portion of the measurement apparatus 1 is indicated by an arrow. Both the reception circuit 31 and the transmission circuit 32 receive or transmit linearly polarized waves whose electric field direction is in one direction. When the circularly polarized reception signal whose electric field direction reversely rotates passes through the circularly polarized wave generator 33, the effect of the circularly polarized wave generator 33 causes it to become linearly polarized waves whose electric field direction is different from that of the transmitted waves.

Then, microwaves or millimeter waves M_{O}' whose electric field direction rotates in one direction (clockwise in the figure) are transmitted from the transmission circuit 32 through the waveguide 35 to the tapered structure 40 by the circularly polarized wave generator 33, propagate through the guide pipe 20 and further through the exposed surface 12 of the carbon electrode 10, and are transmitted toward the molten liquid surface 200.

When the circularly polarized microwaves or millimeter waves M_{O}' whose electric field direction rotates clockwise with respect to a propagation direction (clockwise circularly polarized waves or positive circularly polarized waves) are reflected by the molten liquid surface 200, they become counterclockwise circularly polarized microwaves or millimeter waves Mᵣ' (negative circularly polarized waves) whose electric field direction rotates counterclockwise with respect to the propagation direction of the microwaves or the millimeter waves. Then, the counterclockwise electric field is transmitted to the distance meter 30 through the exposed surface 12 of the carbon electrode 10, the guide pipe 20, the tapered structure 40, and the waveguide 35, and travels backward through the circularly polarized wave generator 33. At this time, since the circularly polarized wave generator 33 generates linearly polarized waves with a different electric field direction from the transmitted linearly polarized waves, the linearly polarized waves are received by the reception circuit 31.

As described above, by using the polarized microwaves or millimeter waves M', since the reception circuit 31 receives only the microwaves or millimeter waves Mᵣ' having an electric field different from that of the microwaves or millimeter waves Mₒ' from the transmission circuit 32, the transmitted waves and the received waves can be almost completely separated, and measurement accuracy can be greatly improved.

Further, in order to lower a noise level to increase a SN ratio, by repeating the measurement a plurality of times (N times) and calculating an average value thereof, floor noise power can be reduced by 1/N.

Alternatively, the floor noise power can be reduced by 1/N by performing the measurement a plurality of times and averaging at least any one or both of an obtained received beat waveform and a distance spectrum waveform obtained by performing FFT processing on the received beat waveform.

### (Verification Result 1)

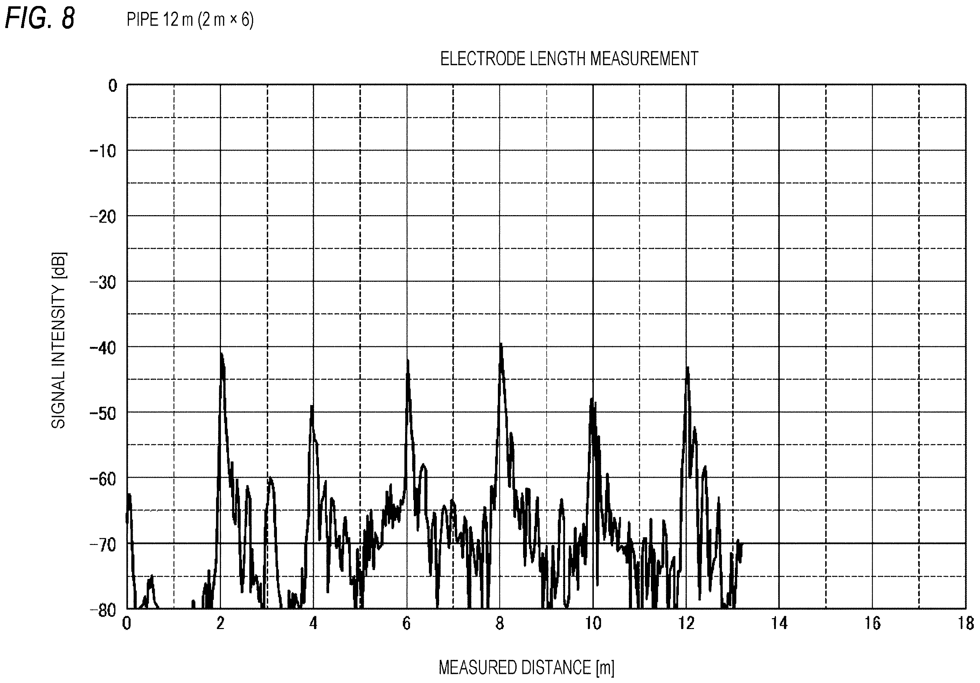

In imitation of the measurement apparatus 1 in FIG. 1, six SUS 304 pipes as guide pipe pieces each having a total length of 2 m were connected together to produce a SUS 304 guide pipe having a total length of 12 m. Then, an iron plate representing the molten liquid surface of the molten iron layer was used to cover the opening at one end portion of the SUS304 guide pipe, and millimeter waves were transmitted from the waveguide of a distance meter attached to the other end to measure a signal strength at each distance. Results are shown in FIG. 8.

In the chart shown in the figure, peaks in the signal strength are due to minute reflections at the joints of the SUS 304 pipes. It can be seen that the peaks appear regularly every 2 m, an equivalent peak also appears at a distance of 12 m, and the millimeter waves propagate through the entire length of the SUS 304 guide pipe.

Further, since it is possible to detect the peaks every 2 m, which correspond to the joints of the guide pipe pieces, by observing the peaks that appear at equal distances and the fixed reflection that appears at a distance, it is possible to estimate clogged locations within the guide pipe or locations where guide pipe pieces come off.

### (Verification Result 2)

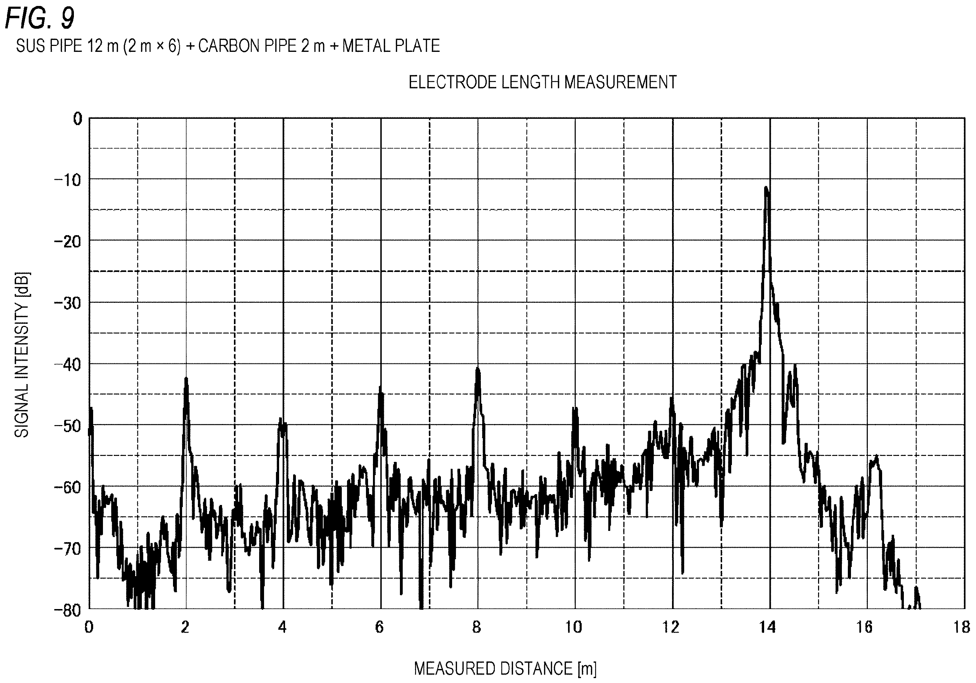

A carbon pipe having the same diameter and a total length of 2 m was connected to one end of the SUS 304 guide pipe equivalent to that in the verification result 1, and an opening of the carbon pipe was blocked with an iron plate. The carbon pipe corresponds to the exposed surface 12 of the carbon electrode 10 in the measurement apparatus 1 of FIG. 1. Then, millimeter waves were transmitted from the waveguide of the distance meter attached to the other end of the SUS guide pipe to measure the signal intensity for each distance. Results are shown in FIG. 9.

In the chart shown in the figure, similar to the verification result 1, peaks appear every 2 m and correspond to the SUS 304 guide pipe. Further, a peak due to the joint also appears at a distance of 12 mm, which is a connection portion of the SUS304 guide pipe and the carbon pipe. Further, it can be seen that a peak also appears at a distance of 14 m due to an iron plate blocking the carbon pipe, and the millimeter waves also propagate through the carbon pipe.

### (Verification Result 3)

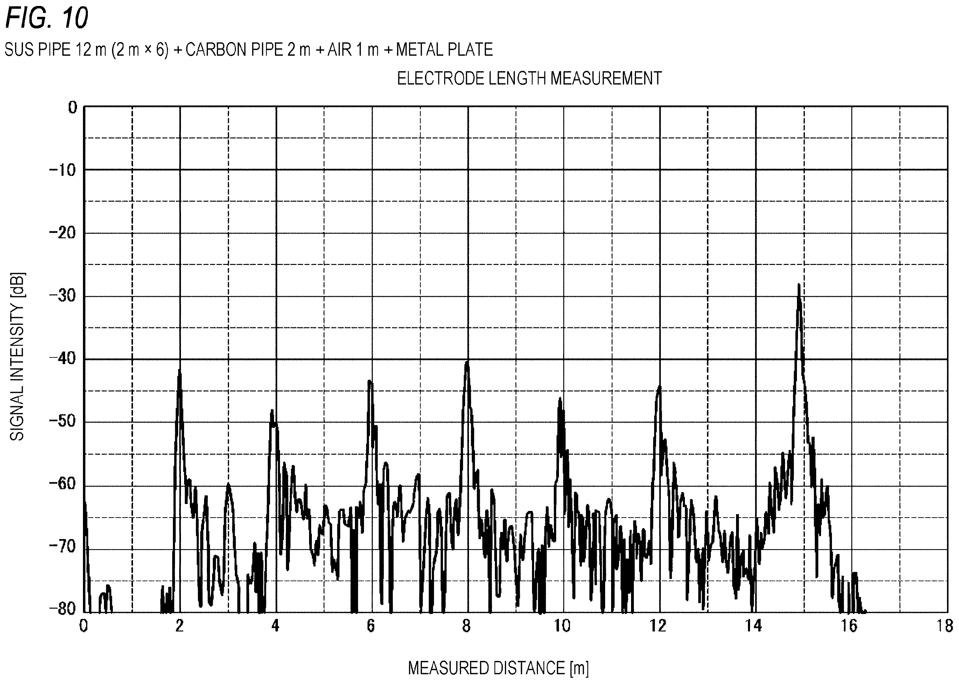

Similar to the verification result 2, the carbon pipe was connected to the SUS304 guide pipe, and the iron plate was disposed 1 m away from the opening of the carbon pipe. Then, millimeter waves were transmitted from the waveguide of the distance meter attached to the other end of the SUS 304 guide pipe to measure the signal intensity for each distance. Results are shown in FIG. 10.

In the chart shown in the figure, similar to the verification result 2, peaks appear every 2 m and correspond to the SUS 304 guide pipe and the carbon pipe. Further, it can be seen that a peak appears also at a position 15 m away from the carbon pipe by 1 m, and the millimeter waves propagate through the carbon pipe and further in the air. This indicates that the measurement can be stably performed by propagating the millimeter waves in the exposed surface 12 from the lower end where the guide pipe 20 melts and falls.

Since the peaks due to the joints of the SUS 304 guide pipe pieces are observed in the above verification result, the number of the guide pipe pieces 21 and the overall length of the guide pipe 20 in the measurement apparatus 1 can be known by counting the number of peaks. Since the peaks of the reflected wave appear every 2 m, the positions of the joints can be measured without correction. This means that a signal velocity (group velocity) of a circular TE11 mode is approximately equal to a speed of light (a speed of a plane wave). That is, this indicates that the inner diameter of the guide pipe 20 is sufficiently larger than the inner diameter of the waveguide 35.

### [Operation Method]

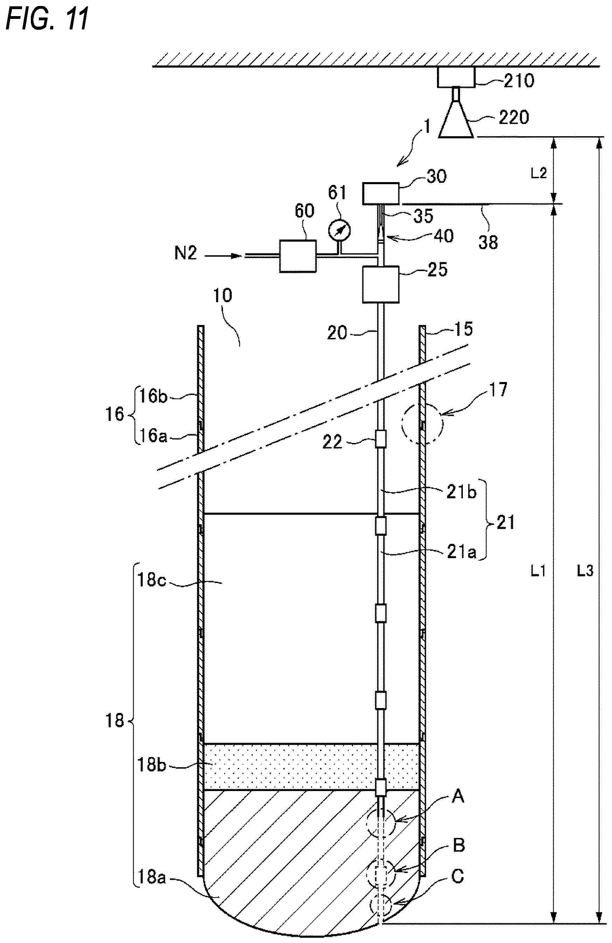

The present invention also relates to a method for operating an electric resistance melting furnace using the measurement apparatus 1. First, as shown in FIG. 11, a distance (L1) from the distance meter 30 to the guide pipe 20, that is, the electrode length of the carbon electrode 10, is determined by using the measurement apparatus 1.

Further, for example, a plate-shaped position measuring member 38 is attached to the distance meter 30, a second distance meter 210 is installed above the distance meter 30, and a separation distance (L2) between the second distance meter 210 and the distance meter 30 is measured. As the second distance meter 210, a general distance meter of microwaves or millimeter waves can be used. Microwaves or millimeter waves are transmitted from the antenna 220 toward the position measuring member 38, the second distance meter 210 receives microwaves or millimeter waves reflected by the position measuring member 38, and the separation distance (L2) is determined from a time difference.

Then, the distance (L1) and the separation distance (L2) are added to obtain a distance (L3), and a hanging position of the carbon electrode 10 is controlled based on a distance signal of the distance (L3).

Since the carbon electrode 10 is consumed and gradually becomes shorter, it is necessary to gradually lower the carbon electrode 10 accordingly. Thus, as described above, the hanging position of the carbon electrode 10 can be controlled by fixing the second distance meter 210 to a place where the height does not change, such as a ceiling of a furnace equipment, and setting the place as a reference position, and knowing the distance (L3) from the reference position to the lower end of the carbon electrode 10.

Accordingly, more stable operation is enabled.

Although the various embodiments have been described, the present invention is not limited thereto. It is apparent to one skilled in the art that a variety of changes or modifications can be made within the scope defined in the claims and are included within the technical scope of the present invention. In addition, the respective constitutional elements in the above embodiments may be arbitrarily combined without departing from the gist of the invention.

The present application is based on Japanese Patent Application No. 2023-115847 filed on July 14, 2023, the contents of which are incorporated herein by reference.

### REFERENCE SIGNS LIST

1: measurement apparatus
10: carbon electrode
12: exposed surface
12a: stepped portion
15: electrode case (metal cover)
16, 16a, 16b: electrode case piece (metal cover piece)
18: electrode body
18a: electrode baking portion
18b: coal tar melting portion
18c: electrode material portion
20: guide pipe
21, 21a, 21b: guide pipe piece
22: joint
23, 71: screw groove
25: guide pipe clamp
30: distance meter
31: reception circuit
32: transmission circuit
33: circularly polarized wave generator
35: waveguide
38: position measuring member
40: tapered structure
41: cavity
50: sealing member
60: pressure regulator
62: intake port
63: fine hole
65: inert gas intake member
70: threaded socket
80: taper union
81: central portion
82: tapered surface
83: stopper
85: screw hole
90: set screw
91: screw
95: hexagonal hole
120: electrode elevating device
200: molten liquid surface
210: second distance meter
220: antenna

## Claims

1. A measurement apparatus of an electrode length of a carbon electrode in an electric resistance melting furnace in which a carbon electrode suspended in the furnace is inserted into an object to be melted deposited in the furnace and the carbon electrode is energized to melt the object to be melted, the measurement apparatus comprising:
a guide pipe formed by connecting a plurality of metallic guide pipe pieces and configured to be inserted to reach a lower end of the carbon electrode; and
a distance meter configured to be attached to an upper end of the guide pipe, and including a waveguide and a transmission and reception unit for a microwave or a millimeter wave, wherein:
an inner diameter of the guide pipe is larger than an inner diameter of the waveguide of the distance meter;
the guide pipe and the distance meter are connected via a tapered structure having a tapered cavity expanding from the waveguide toward the guide pipe; and
the microwave or the millimeter wave is transmitted from a lower end of the guide pipe toward a molten liquid surface of the object to be melted, and the microwave or the millimeter wave reflected by the molten liquid surface is received to measure a distance between the distance meter and the molten liquid surface.

2. The measurement apparatus of an electrode length of a carbon electrode in an electric resistance melting furnace according to claim 1, wherein
the guide pipe pieces are connected by a threaded socket.

3. The measurement apparatus of an electrode length of a carbon electrode in an electric resistance melting furnace according to claim 1, wherein
the guide pipe pieces are connected to each other by a taper union having an outer shape in which two tapered surfaces extending continuously from a central portion having a maximum diameter to both ends are formed.

4. The measurement apparatus of an electrode length of a carbon electrode in an electric resistance melting furnace according to claim 1, wherein
a connecting portion between the tapered structure and the guide pipe is closed by a member made of a material through which the microwave or the millimeter wave passes.

5. The measurement apparatus of an electrode length of a carbon electrode in an electric resistance melting furnace according to claim 1, wherein
an inert gas is supplied to the guide pipe to increase an internal pressure, when the internal pressure rapidly increases, it is determined that the guide pipe is clogged, and the supply amount of the inert gas is increased to remove a clogged portion.

6. The measurement apparatus of an electrode length of a carbon electrode in an electric resistance melting furnace according to claim 1, wherein
a metal plate having a hole with an opening diameter that does not allow the microwave or the millimeter wave to penetrate, or a wire mesh having an opening that does not allow the microwave or the millimeter wave to penetrate, is attached to a supply port of an inert gas to the guide pipe.

7. The measurement apparatus of an electrode length of a carbon electrode in an electric resistance melting furnace according to claim 1, wherein
the microwave or the millimeter wave is circularly polarized and transmitted toward the molten liquid surface.

8. The measurement apparatus of an electrode length of a carbon electrode in an electric resistance melting furnace according to claim 1, further comprising:
a measurement mode configured to measure an electrode length of the carbon electrode a plurality of times and calculate an average value thereof.

9. The measurement apparatus of an electrode length of a carbon electrode in an electric resistance melting furnace according to claim 1, further comprising:
a measurement mode configured to measure an electrode length of the carbon electrode a plurality of times, and average at least any one or both of the obtained received beat waveform and a distance spectrum waveform obtained by performing FFT processing on the received beat waveform.

10. The measurement apparatus of an electrode length of a carbon electrode in an electric resistance melting furnace according to claim 1, wherein
the guide pipe is made of SUS.

11. The measurement apparatus of an electrode length of a carbon electrode in an electric resistance melting furnace according to claim 1, wherein
a reflection signal appearing at every constant distance of the guide pipe is observed.

12. An operation method of an electric resistance melting furnace in which a carbon electrode suspended in the furnace is inserted into an object to be melted deposited in the furnace and the carbon electrode is energized to melt the object to be melted, the operation method comprising:
determining a distance (L1) from the distance meter to the molten liquid surface by the measurement apparatus of an electrode length of a carbon electrode according to any one of claims 1 to 11;
measuring a separation distance (L2) between the distance meter and a second distance meter that is disposed above the distance meter, and determining a distance (L3) from the second distance meter to the molten liquid surface by adding the separation distance (L2) and the determined distance (L1); and
controlling a hanging position of the carbon electrode based on the distance (L3).
